# EUROPEAN PATENT APPLICATION

(11) **EP 2 868 912 A1**
(43) Date of publication of application: **06.05.2015**
(21) Application number: 13306481.6
(22) Date of filing: 30.10.2013
(51) Int. Cl.: F03B 1/02

(54) **Pelton turbine wheel and pelton turbine comprising such a wheel**

(71) Applicant: ALSTOM Renewable Technologies, 38100 Grenoble (FR)
(72) Inventor: Balcet, Nicolas, 92330 Sceaux (FR); Jogiya, Hiteshkumar, 360577 Porbandar (IN)
(74) Representative: Alstom Technology Ltd

(57) **Abstract**

The Pelton turbine wheel according to the invention comprises several buckets (14). Each bucket (14) comprises an intrados surface turned toward a preceding bucket (14') and intended to receive a jet of water and an extrados surface turned toward a following bucket (14"), as well as a trailing edge (24) that connects the intrados surface and the extrados surface. The intrados and extrados (24) surfaces are formed by the structural portion (18) of the bucket that is made from a first material. Each bucket (14) comprises at least one part (30, 32) made from a second material different from the first material. That part (30, 32) is fastened on each bucket (14), either in the vicinity of the training edge (24), extending beyond the trailing edge, in the orthoradial direction and toward the preceding bucket (14'), or on the extrados surface (22), while extending beyond the extrados surface (22), in the orthoradial direction and toward the following bucket (14"). The attached part (30, 32) forms a screen that participates in confining the jet of water received in the bucket (14).

## Description

The present invention relates to a Pelton turbine wheel comprising several buckets, as well as a Pelton turbine comprising such a wheel and a distribution assembly for supplying said wheel with water.

The principle of a Pelton turbine is to convert the kinetic energy of the water into mechanical energy. The mechanical energy leaving the turbine may also be used to command a mechanical member or converted into electricity via an alternator. The jets of water used to rotate the Pelton turbine are provided by means of a water distribution assembly that supplies injectors with water, which generate high-speed water jets that then strike the buckets of the wheel, so as to rotate the wheel.

In the field of Pelton turbines, it is known that, when the wheel rotates at a high speed, it undergoes aerodynamic disruptions that result in decreasing the overall effectiveness of the turbine. These disruptions are, *inter alia,* due to the aerodynamic behavior of the wheel and consequently of the buckets that make it up, as well as the deformation of the water jets. In fact, the water jets are disrupted when they interact with the air surrounding the wheel, before coming into contact with the buckets. The zone between two consecutive buckets is subjected to aerodynamic disruptions and, each time the jet goes between two buckets, it is disrupted and breaks up.

In order to improve the overall effectiveness of a turbine, it is known from US-A-2004/0120821 to produce buckets whereof the trailing edge is concave, with the concavity the thereof oriented toward the bottom of the bucket. This makes it possible to obtain a lowered trailing edge relative to the previously existing solutions. The lowered trailing edge makes it possible to free the water comprised in each bucket more quickly and to limit the surface over which the water is in contact with each bucket. However, such buckets do not make it possible to reduce the losses related to the aerodynamic behavior of the wheel, or to prevent the jets of water coming from the injectors from being disrupted or disaggregated.

The aim of the present invention is therefore to propose a Pelton turbine wheel where the aerodynamic behavior is optimized and which limits the disruptions of the jet(s) of water coming from each injector.

To that end, the invention relates to a Pelton turbine wheel comprising several buckets, each bucket being positioned, in a direction orthoradial to an axis of rotation of the wheel, between a preceding bucket and a following bucket and comprising a structural force-transmitting portion made from a first material and which defines an intrados surface turned toward the preceding bucket and intended to receive a jet of water, and an extrados surface turned toward the following bucket and a trailing edge that connects the intrados surface and the extrados surface. According to the invention, each bucket comprises at least one part made from a second material different from the first material, that part being fastened on the structural portion, either in the vicinity of the trailing edge, while extending beyond the trailing edge, in the orthoradial direction and toward the preceding bucket, or on the extrados surface, while extending beyond the extrados surface, in the orthoradial direction and toward the following bucket, while the attached part forms a screen to participate in confining the jet of water received in the bucket.

Owing to the invention, the part(s) attached on each bucket make(s) it possible to protect the jet of water circulating between two successive buckets of the Pelton turbine wheel and thus to avoid any deformation or disaggregation of the jet of water, which keeps its kinetic energy until it impacts the intrados surface. The attached part(s) also make(s) it possible to increase the effectiveness of a Pelton turbine comprising such a wheel, since the kinetic energy of the jet is preserved, which makes it possible to optimize the mechanical energy created by the jet. Furthermore, the attached part(s) make(s) it possible to regulate the flow of air between successive buckets and thereby improve the aerodynamic behavior in the air of the wheel.

According to other advantageous aspects of the invention, the Pelton turbine wheel comprises one or more of the following features, considered alone or according to any technically allowable combination:
- Each bucket comprises two first attached parts each on the extrados surface and extending beyond that extrados surface, in the orthoradial direction and toward the following bucket.
- Each first attached part is formed by a fin, which is globally planar and perpendicular to the axis of rotation of the wheel, and the length of each fin, measured in a radial direction relative to the axis of rotation of the wheel, is comprised between 10% and 120% of the maximum width of the intrados surface of the bucket, measured parallel to the axis of rotation of the wheel.
- The maximum height of each fin, measured in the orthoradial direction, is comprised between 10% and 70% of the maximum width of the intrados surface of the bucket.
- Each bucket comprises a central rim extending in a radial direction relative to the axis of rotation of the wheel, while the two fins are positioned on either side of the central rim and the distance between each fin and the central rim, measured along the axis of rotation of the wheel, is comprised between 20% and 50% of the maximum width of the intrados surface of the bucket.
- The surface area of each fin, in a plane perpendicular to the axis of rotation of the wheel, is comprised between 10% and 70% of the maximum width of the intrados surface of the corresponding bucket squared.
- The trailing edge of each bucket comprises first and second outer radial zones, while each bucket comprises a second attached part respectively in the vicinity of the first and second outer radial zones and the second attached parts extend beyond those outer radial zones, in the orthoradial direction and toward the preceding bucket.
- Each second attached part extends between an outer radial end adjoining an outer radial end of the trailing edge and an inner radial end, closer to a fastening area of the bucket to a hub of the wheel than the outer radial end, over a length, measured in a radial direction relative to the axis of rotation of the wheel, comprised between 10% and 70% of the maximum width of the intrados surface of the bucket, measured along the axis of rotation of the wheel.
- A raising height of each second attached part relative to the trailing edge, measured in the orthoradial direction, increases from the inner radial end toward the outer radial end, while the maximum raising height is comprised between 5% and 50% of the maximum width of the intrados surface of the bucket.

The invention also relates to a Pelton turbine comprising a distribution unit for supplying water to a Pelton turbine wheel as described above.

The invention will be better understood, and other advantages thereof will appear more clearly, in light of the following description, provided solely as a non-limiting example and done in reference to the drawings, in which:
- figure 1 is a diagrammatic side view of a Pelton turbine according to a first embodiment of the invention;
- figure 2 is an enlarged view of the buckets of detail II of figure 1;
- figure 3 is an enlarged front view along arrow III of a bucket of figure 2;
- figure 4 is a cross-section of figure 3 along line IV-IV;
- figure 5 is a cross-section of figure 4 along line V-V;
- figure 6 is a view similar to figure 2 for a turbine wheel according to a second embodiment of the invention.

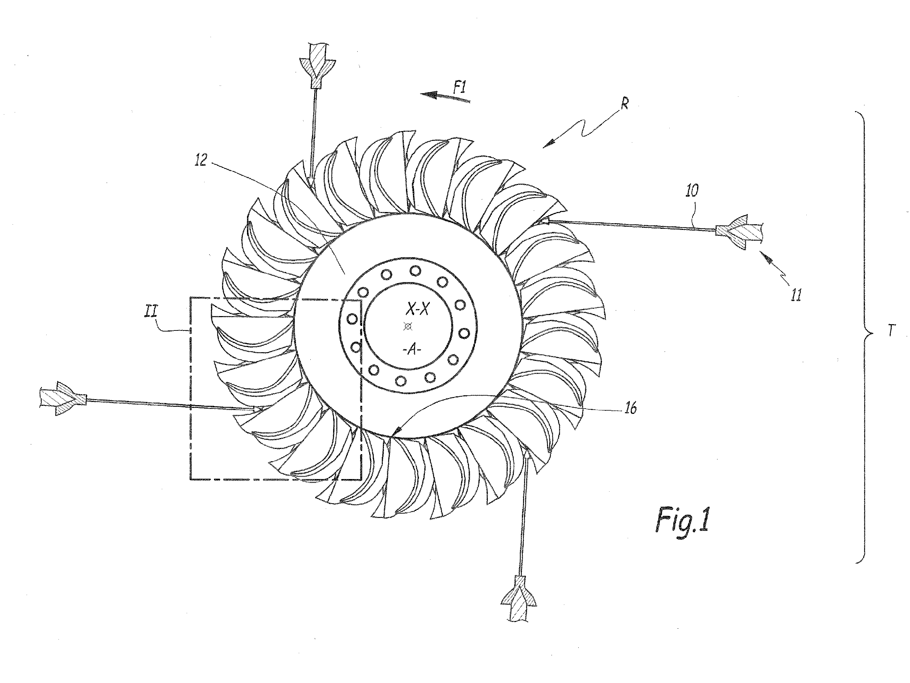

In figure 1, a Pelton turbine T comprises a wheel R capable of rotating around a horizontal axis of rotation X-X, defined by a shaft A, under the effect of four jets of water 10. The turbine T also comprises four injectors 11 capable of producing the jets of water 10 and orienting them toward the wheel R.

The water used to produce the jets of water 10 generally comes from a reservoir (not shown) and is guided toward the injectors 11 via conduits (not shown). The injectors 11 belong to a water distribution unit that is known in itself and is not shown in detail. The injectors 11 are capable of accelerating water coming from the reservoir and thus converting the potential energy of the water into kinetic energy, via the jets 10.

The wheel R comprises a hub 12, fastened to the shaft A, and several buckets 14. The buckets 14 are fastened to the hub 12 in the vicinity of a fastening area 16. The hub 12 and the buckets 14 form a unitary structure.

The buckets 14 are intended to receive the jets of water 10, which come into contact with the buckets 14 with significant kinetic energy, so as to initiate and maintain the rotation of the wheel R around the axis X-X, in the direction of the arrow F1 of figure 1.

Thus, the turbine T is capable of converting the kinetic energy of the jets of water 10 into mechanical energy transmitted to the hub 12 and the shaft A.

The buckets are identical.

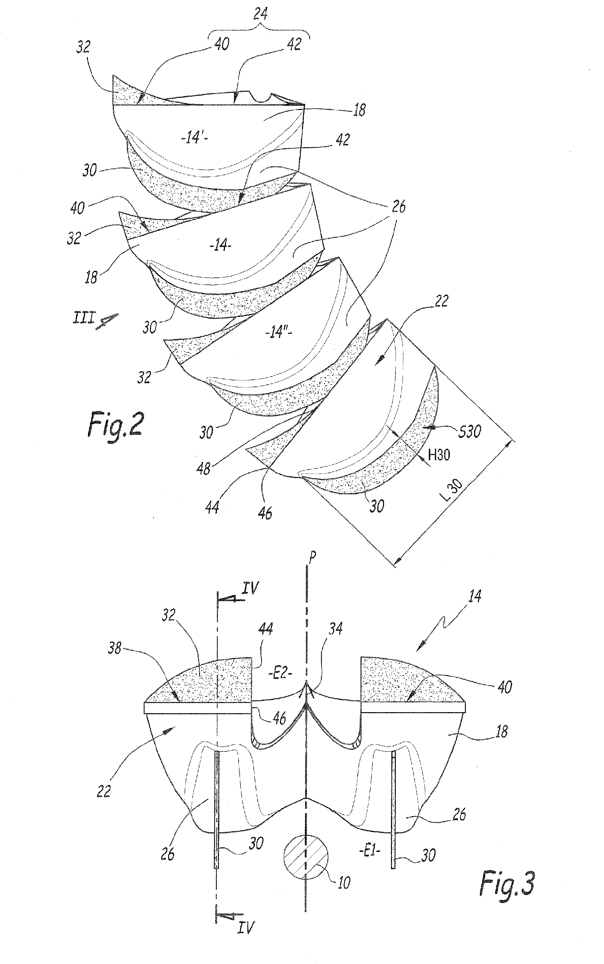

Each bucket 14 is positioned, in a direction orthoradial to the axis of rotation X-X, between a preceding bucket 14' and a following bucket 14". This is shown in figure 2 for the bucket visible only in figures 3 to 5.

Each bucket 14 comprises a structural portion 18, for transmitting the force exerted by the jets of water 10 on the bucket 14, when it comes into contact with the bucket 14. The structural portion 18 guarantees the mechanical properties of the bucket 14. It defines an intrados surface 20 turned toward the preceding bucket 14' and intended to receive the jets of water 10 and an extrados surface 22 turned toward the following bucket 14". The structural portion 18 is made from a first material allowing it to withstand intense dynamic forces, for example made from steel of type ASTM A743 CA6NM.

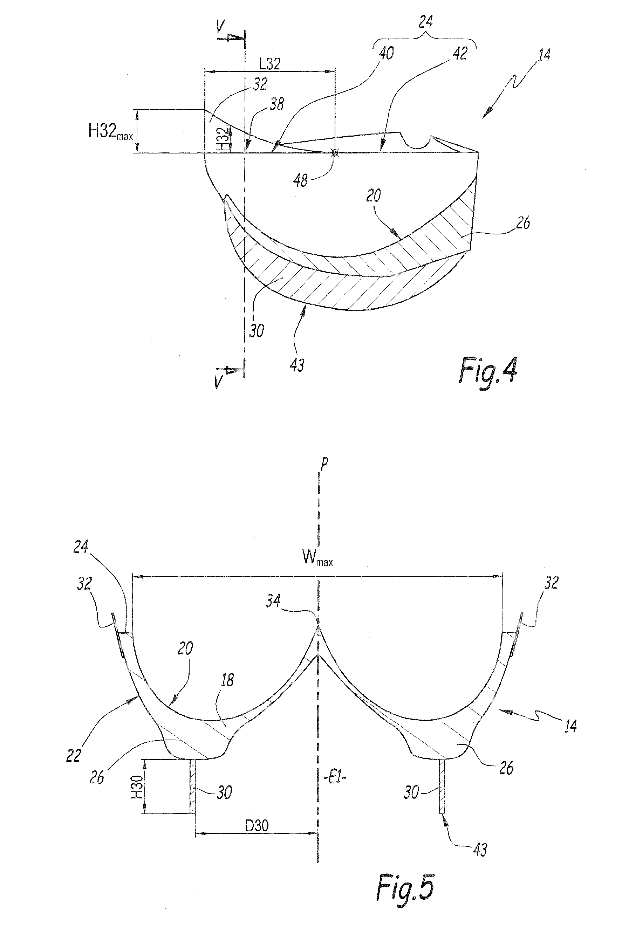

The structural portion 18 of each bucket 14 also comprises a trailing edge 24 that connects the intrados surface 20 and the extrados surface 22 to the periphery of the bucket and to at least one heel 26 for stiffening the bucket 14, arranged on its extrados surface 22. More specifically, and as shown in figures 3 and 5, each bucket 14 comprises two stiffening heels 26.

Furthermore, each bucket 14 comprises two first parts 30 each attached in the vicinity of a different heel 26 and which extend beyond that heel 26, in the orthoradial direction and toward the following bucket 14".

Alternatively, first attached parts 30 are fastened on the extrados surface 22.

Each bucket 14 also comprises two second parts 32 attached on the structural portion 18 in the vicinity of the trailing edge 24 and which extend beyond the trailing edge 24, in the orthoradial direction and toward the preceding bucket 14'.

To facilitate their identification, the parts 30 and 32 are shaded in figures 2 and 3.

Each bucket 14 comprises, on the side of its intrados surface 20, a central rim 34 that extends in a radial direction relative to the axis of rotation X-X of the wheel R. The central rim divides the bucket 14 in two, along the plane P comprising the central rim 34 and the orthoradial direction.

The trailing edge 24 of each bucket 14 comprises, on either side of the plane P, first 38 and second 40 outer radial zones that correspond to the two zones of the trailing edge 24 furthest from the axis X-X. The rest of the trailing edge 24 defines an inner radial zone 42.

The stiffening heels 26 are positioned on either side of the central rim 34, i.e., on either side of the plane P. Thus, the first attached parts 30 are positioned on either side of the central rim 34.

The first attached parts 30, as well as the second attached parts 32, are made from a second material, different from the first material making up the structural portion 18 of each bucket 14. The first 30 and second 32 attached parts are intended to perform an aerodynamic function and do not have a mechanical function similar to that of the structural portion 18. Thus, the first 30 and second 32 parts form a light structure compared to the structural portion 18. The first 30 and second 32 parts are for example made from canvas, sheet metal or a composite material.

For each bucket 14, the first and second parts 30, 32 form a screen that participates in confining the jet of water 10 received in the bucket 14. More specifically, the first and second parts 30, 32 are capable of protecting the jets 10 with respect to the aeraulic disruptions outside the wheel R.

Each first part 30 is attached in the vicinity of a different stiffening heel 26 and therefore on either side of the central rim 34. If it is made from metal, the first part 30 may be welded on the heel 26 that it extends. Alternatively, the first part is glued or assembled by bolting on the structural portion 18.

Each first part is formed by a globally planar fin 30 perpendicular to the axis of rotation X-X of the wheel R.

Wₘₐₓ denotes the maximum width of the intrados surface 20 of the buckets 14, measured parallel to the axis of rotation X-X of the wheel R.

The length L30 of each fin 30, measured in a radial direction relative to the axis of rotation X-X of the wheel R, is comprised between 10% and 120% of the maximum width Wₘₐₓ of the intrados surface 20 of the buckets 14. Preferably, the ratio L30/Wₘₐₓ is comprised between 50% and 100%.

H30 denotes the maximum height of each fin 30, measured in the orthoradial direction, i.e., the maximum distance between an outer edge 43 of that fin opposite the heel 26 on which it is fastened, on the one hand, and that heel on the other hand. This maximum height is comprised between 10% and 70% of the maximum width Wₘₐₓ of the intrados surface 20. Preferably, the ratio H30/Wₘₐₓ is comprised between 30% and 50%. More generally, the maximum height H30 of each fin 30 is limited, such that the fin 30 is not in contact with the intrados side 20 of the following bucket 14" and does not disturb the flow of water at the following bucket 14.

Furthermore, for each bucket 14, the distance D30 between each fin 30 and the central rim 34, measured along the axis of rotation X-X of the wheel R, is comprised between 20% and 50% of the maximum width Wₘₐₓ of the intrados surface 20 of the bucket 14. Preferably, the ratio D30/Wₘₐₓ is comprised between 20% and 35%.

The two fins 30 of each bucket 14 are respectively positioned on a different heel 26 and define a first space E1 between them, through which the jets of water 10 oriented toward the following bucket 14" are intended to pass and inside which those jets 10 are confined, as shown by a jet 10 in figure 3.

Furthermore, the surface area S30 of each fin 30 in a plane perpendicular to the axis of rotation X-X is comprised between 10% and 70% of the maximum width Wₘₐₓ of the intrados side 20 of the corresponding bucket 14 squared. Preferably, the ratio S30/Wₘₐₓ² is comprised between 30% and 50%. More generally, the surface has sufficient dimensions to protect the jet 10 from outside aerodynamic disruptions.

In figures 2 and 4, it will be noted that the outer edge 43 of the fin 30, furthest from the extrados surface 22 in the orthoradial direction, is generally in the shape of an arc of circle.

The second parts 32 are attached on each bucket 14 respectively in the vicinity of the first 38 and second 40 outer radial zones. Depending on the nature of the second material from which it is made, the second parts may also be welded, glued or bolted on the structural portion 18.

The second parts 32 are attached on the outside of the trailing edge 24. They extend beyond outer radial zones 38, 40, in the orthoradial direction, toward the preceding bucket 14'. More specifically, for each bucket 14, each second part 32 comprises an outer radial end 44 adjoining an outer radial end 46 of the trailing edge 24, and an inner radial end 48, closer to a fastening area 16 of the bucket 14 on the hub 12, than the outer radial end 44. Thus, for each bucket 14, each second part 32 extends between the outer radial end 44 and the inner radial end 48. More generally, the trailing edge 24 of each bucket 14 comprises two outer radial ends 46 respectively belonging to the first 38 and second 40 outer radial zones. These two outer radial zones 46 each adjoin the outer radial end 44 of a different second part 32.

The length L32 over which each second part 32 extends, measured in a radial direction relative to the axis of rotation X-X of the wheel R, is comprised between 10% and 70% of the maximum width W_{max.}. Preferably, the ratio L32/Wₘₐₓ is comprised between 40% and 70%.

The two second parts 32 of each bucket 14 are respectively attached in the vicinity of the first 38 and second 40 outer radial zones, since the distance between the trailing edge 24, the bucket 14, and the preceding bucket 14', measured in a direction orthoradial to the axis of rotation X-X in the vicinity of the inner radial zone 42, is generally very limited.

Furthermore, the raising height H32 of each second part 32, measured relative to the corresponding trailing edge 24, in the orthoradial direction and toward the preceding bucket 14', increases from the inner radial end 48 toward the outer radial end 44. The maximum raising height H32ₘₐₓ, considered at the end 44, is comprised between 5% and 50% of the maximum width Wₘₐₓ of the intrados side 20. Preferably, the ratio H32ₘₐₓ/Wₘₐₓ is comprised between 20% and 40%.

The two second parts 32 define a second space E2 for confining jets of water 10, turned toward the preceding bucket 14'.

Thus, when the jets of water 10 pass through the first space E1 of one bucket 14 and the second space E2 of a following bucket 14", the jet is respectively confined between the fins 30 and the second parts 32 and thus protected from aerodynamic disruptions related to flows of air present around the buckets 14.

The second parts 32 are comparable to an extension of the extrados side of each bucket 14 toward the preceding bucket 14'.

Alternatively, the second parts 32 form aerodynamic surfaces, such as ribs, capable of controlling the flow of air and optimizing the aerodynamic behavior of the wheel R and, more specifically, of each bucket 14.

The maximum distance measured in a radial direction between the axis of rotation X-X of the wheel R and each first part 30 and each second part 32 is smaller than the maximum radius of the wheel R, measured between the axis of rotation and one of the outer radial ends 46 of a trailing edge 24. Thus, the first 30 and second 32 parts do not come into contact with the components of the turbine T positioned in the vicinity of the wheel R, such as the injectors 11.

Owing to the first 30 and second 32 parts, the confinement of the jets of water 10 is optimized and their initial shape at the outlet of the injectors 11 is preserved until they come into contact with the intrados side 20 of a bucket.

The second parts 32 advantageously make it possible to capture or accelerate the air surrounding them, so as to limit the turbulence surrounding the jet 10. The flow of air circulating around the wheel R is thus controlled and the aerodynamic behavior of the buckets 14 of the wheel R is optimized.

Alternatively, each bucket 14 comprises only the two first parts 30 or the two second parts 32.

According to another alternative, each bucket 14 comprises only the two first parts 30 that are attached on the following bucket in the vicinity of its trailing edge 24. In a view comparable to figure 3, the first parts 30 then diverge downwardly to be attached on the trailing edge 24 of the following bucket 14". In that case, these parts are bent and no longer planar.

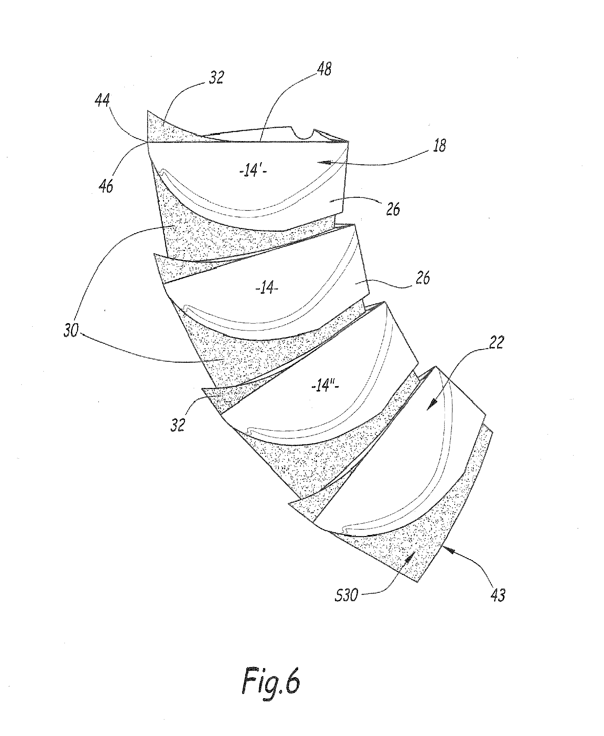

Figure 6 shows a second embodiment of the invention in which the elements generally similar to a first embodiment bear the same references. In this figure, the parts 30 and 32 are shaded to facilitate their identification, as in figure 2. In this embodiment, the first parts 30 have a different shape from those of the first embodiment. More specifically, the outer edge 43 of each end 30, furthest from the extrados surface 22, has a generally rectilinear shape.

Thus, according to the considered embodiment, the surface S30 of the first parts 30 is different and the jets of water 10 are more or less confined when they pass through the first space E1. The second embodiment has substantially the same advantages as the first embodiment.

Alternatively, the stiffening heels 26 are merged with the structural portion 18. In this alternative, the fins 30 are fastened on the extrados surface, while extending beyond the extrados surface, in the orthoradial direction and towards the following bucket 14". In this alternative, the two fins are positioned on either side of the central rim 34.

The embodiments and alternatives mentioned above may be combined with each other or modified to create other embodiments of the invention.

## Claims

1. A Pelton turbine wheel (R) comprising several buckets (14), each bucket (14) being positioned, in a direction orthoradial to an axis of rotation (X-X) of the wheel, between a preceding bucket (14') and a following bucket (14") and comprising:
- a structural force-transmitting portion (18) made from a first material and which defines an intrados surface (20) turned toward the preceding bucket (14') and intended to receive a jet of water (10), and an extrados surface (22) turned toward the following bucket (14"), and
- a trailing edge (24) that connects the intrados surface (20) and the extrados surface (22),
**characterized in that** each bucket (14) comprises at least one part (30, 32) made from a second material different from the first material, **in that** that part (30, 32) is fastened on the structural portion (18):
- either in the vicinity of the trailing edge (24), while extending beyond the trailing edge, in the orthoradial direction and toward the preceding bucket (14'),
- or on the extrados surface (22), while extending beyond the extrados surface, in the orthoradial direction and toward the following bucket (14"),
and **in that** the attached part (30, 32) forms a screen to participate in confining the jet of water received in the bucket (14).

2. The wheel according to claim 1, **characterized in that** each bucket (14) comprises two first attached parts (30) each on the extrados surface (22) and extending beyond that extrados surface, in the orthoradial direction and toward the following bucket (14").

3. The wheel according to claim 2, **characterized in that** each first attached part is formed by a globally planar fin (30) perpendicular to the axis of rotation (X-X) of the wheel, and **in that** the length (L30) of each fin, measured in a radial direction relative to the axis of rotation of the wheel, is comprised between 10% and 120% of the maximum width (Wₘₐₓ) of the intrados surface (20) of the bucket (14), measured parallel to the axis of rotation of the wheel.

4. The wheel according to claim 3, **characterized in that** the maximum height (H30) of each fin, measured in the orthoradial direction, is comprised between 10% and 70% of the maximum width (Wₘₐₓ) of the intrados surface (20) of the bucket (14).

5. The wheel according to one of claims 3 or 4, **characterized in that** each bucket (14) comprises a central rim (34) extending in a radial direction relative to the axis of rotation (X-X) of the wheel, **in that** the two fins (30) are positioned on either side of the central rim (34) and **in that** the distance (D30) between each fin (30) and the central rim, measured along the axis of rotation of the wheel, is comprised between 20% and 50% of the maximum width (Wₘₐₓ) of the intrados surface (20) of the bucket (14).

6. The wheel according to one of claims 3 to 5, **characterized in that** the surface area (S30) of each fin, in a plane perpendicular to the axis of rotation (X-X) of the wheel, is comprised between 10% and 70% of the maximum width (Wₘₐₓ) of the intrados surface (20) of the corresponding bucket (14) squared.

7. The wheel according to one of the preceding claims, **characterized in that** the trailing edge (24) of each bucket (14) comprises first (38) and second (40) outer radial zones, and **in that** each bucket (14) comprises a second attached part (32) respectively in the vicinity of the first and second outer radial zones and **in that** the second attached parts extend beyond those outer radial zones, in the orthoradial direction and toward the preceding bucket (14').

8. The wheel according to claim 7, **characterized in that** each second attached part (32) extends between an outer radial end (44) adjoining an outer radial end (46) of the trailing edge (24) and an inner radial end (48), closer to a fastening area (16) of the bucket to a hub (12) of the wheel than the outer radial end (46), over a length (L32), measured in a radial direction relative to the axis of rotation (X-X) of the wheel, comprised between 10% and 70% of the maximum width (Wₘₐₓ) of the intrados surface of the bucket (14), measured along the axis of rotation of the wheel.

9. The wheel according to claim 8, **characterized in that** a raising height (H32) of each second attached part (32) relative to the trailing edge (24), measured in the orthoradial direction, increases from the inner radial end (48) toward the outer radial end (44), and **in that** the maximum raising height (H32ₘₐₓ) is comprised between 5% and 50% of the maximum width (Wₘₐₓ) of the intrados surface (20) of the bucket (14).

10. A Pelton turbine (T) comprising a distribution unit (11) for supplying water to a Pelton turbine wheel, **characterized in that** the Pelton turbine wheel (R) is according to one of claims 1 to 9.
